# EUROPEAN PATENT SPECIFICATION

(11) **EP 3 216 767 B1**
(45) Date of publication and mention of the grant of the patent: **19.09.2018**
(21) Application number: 16159791.9
(22) Date of filing: 11.03.2016
(51) Int. Cl.: C02F 1/42

(54) **SINGLE-USE CAPSULE FOR WATER TREATMENT**
EINWEGKAPSEL ZUR WASSERBEHANDLUNG
CAPSULE À USAGE UNIQUE POUR LE TRAITEMENT DE L'EAU

(43) Date of publication of application: 13.09.2017
(73) Proprietor: RIPRUP Company S.A., St. Peter Port GY1 1WQ (GG)
(72) Inventor: SCHUCKER, Josef, 6622 Ronco/Ascona (CH); BISSEN, Monique, 75175 Pforzheim (DE)
(74) Representative: Müller-Dyck, Martina

(56) References cited:
- WO-A1-2008/102407
- GB-A- 1 552 559
- US-A- 3 038 610
- US-A- 4 749 481
- US-A1- 2014 374 327

## Description

### Technical field

The invention relates to water treatment. In particular, the invention relates to a single-use capsule for water treatment and to a receiving device for receiving a single-use capsule.

### Background of the invention

Methods for treating drinking water at the point of use (PoU) are often employed in order to protect devices against limescale, to remove heavy metals, and to improve taste, smell and appearance of water by removing undesirable substances such as chlorine.

Point of use water treatment can be provided by pipeline-bound filter systems, so called PoU filter cartridges, which are directly installed in the drinking water pipeline upstream of the device that shall be protected against limescale. For example, filter cartridges are typically installed upstream of coffee machines, vending machines, steamers, ovens, water dispensers and ice makers. Water hardness, heavy metals and chlorine are removed from the water by the filter cartridges. Furthermore, there are PoU filters which are installed at a water fitting such as a shower faucet for protecting shower heads or panels against limescale. Other filters that can be screwed directly to a water fitting such as a faucet in the kitchen are filters for removing unwanted taste and odor from water, ozone-producing filters for water disinfection, and filters for removal of heavy metals. There are also non pipeline-bound PoU filter systems available. These are mainly filter cartridges for limescale protection and elimination of undesirable odorous substances and flavors, which are installed in water tanks of devices such as coffee machines, or filter systems that are provided in filter pitchers (i.e. gravity filters or table water filters).

All these filters have in common that they are designed for being used for a longer period of time, which is typically one to twelve months or even longer. However, due to the fact that drinking water is never germ-free and the filter materials have a large surface, all PoU filter systems have the problem that during the use period bacteria and other pathogens may be accumulated and bred in the filter material, which then can be released in a high number into the filtered water.

Silver, which has a bacteriostatic effect, has been used in filter cartridges to prevent bacterial growth, for example, in form of silver-impregnated activated carbon or silver-impregnated ion exchange materials. However, the efficacy of such materials is questionably since they do not avoid bacterial contamination and growth completely, but can only reduce or slow down the rate of bacterial growth. Furthermore, there are silver-resistant bacteria, which can proliferate in such filters undisturbed, and may lead to a strong bacterial contamination within a very short time period.

Silver-containing filter cartridges have also the drawback that they continuously leach silver ions into the filtered water, for example, in a concentration from 10 to 200 µg/l. This gives rise to health concerns since in larger amounts some silver compounds may be toxic. Silver ions have a high affinity for sulfhydryl and amino groups, and therefore, complexation with amino acids, nucleic acids and other compounds may occur in the human body resulting in a depositing of silver in the body, especially in the connective tissue, skin and eyes.

Thus, according to the state of the art, PoU filters do not allow the production of clean and hygienically safe water, which is free of silver. The afore-mentioned problems are the reason that PoU-filter systems are heavily criticized or are even rejected by the health authorities, for example, in Germany, Switzerland, Italy, Poland, and France. In some countries efforts are made to prohibit the use of PoU-filter systems. Moreover, consumer magazines such as "Stiftung Warentest" in Germany (see Stiftung Warentest, Test 05/2015) or "Der Konsument" in Austria (see Der Konsument 08/2015) strongly advise against the use of such PoU-filter systems.

US 4 749 481 A relates to a single use inexpensive throw-away water treating device which comprises a packet having a top wall, a bottom wall, and a peripheral sidewall connecting said top and bottom walls, said packet filled with one or more dosages of solid water treating chemicals spaced from said walls. A deionization unit with atomatic shutoff is described in US 3 038 610 A.

US 2014/0374327 A1 discloses a water filtration apparatus comprising a filtration receptacle having a filter positioned therein, wherein the filter comprising a plurality of removable filtration modules selected from the group consisting of a disinfection module, a taste improvement module, an organic contaminant removal module, an arsenic removal module, a base pathogen module, a mineral removal module, a salt removal module, a flavor module, a vitamin module, and a pharmaceutical module.

Hence, there is a need in the art for water treatment systems, which can be easily installed at the point-of-use and avoid the drawbacks of the prior art systems.

### Disclosure of the invention

There may be a need to improve water treatment and to avoid the drawbacks of the prior art. This is addressed by the subject-matter of the independent claims. Further examples and embodiments are set out in the dependent claims, the description and the figures.

A first aspect of the invention relates to a single-use capsule for water treatment. The single-use capsule comprises a capsule body defining an inlet side and an outlet side, and a first cavity located within the capsule body, wherein the first cavity comprises an ion exchange element, wherein the single-use capsule comprises a flat sheet membrane filter arranged within the capsule body, wherein the flat sheet membrane filter has a pore size of 0.2 µm and lower, and wherein the ion exchange element comprises a weak acid and/or strong acid cation exchange material, which is 100% in the hydrogen form. Optionally, the single-use capsule may comprise an activated carbon element arranged within the capsule body.

In other words, the invention may relate to a single-use filter capsule which may be used at the point of use (PoU) for limescale protection and/or for removing bacteria and/or for improving the taste and quality of water and/or for heavy metal removal. Furthermore, the single-use capsule of the present invention avoids the problem of bacterial contamination and does not require the incorporation of silver in order to prevent bacterial growth, which may lead to an elevated leach out of silver into the treated water. The single-use capsule may be used together with a receiving device, i.e. an adapter, that is provided directly at a water armature such as a faucet, e.g., in a kitchen, a bar, or an office. Furthermore, the receiving device may be provided in a beverage dispenser such as coffee machines, tee brewing devices, vending machines, water or soft drink dispensers.

The single-use capsule may be used for treating a maximum of 5 liters of water. In the context of the invention, water treatment provided by the single-use capsule may include purification, decarbonation and/or softening of water. According to one embodiment, the single-use capsule of the present invention provides limescale protection as well as the reduction of the concentration of heavy metals and other contaminants such as nitrate, nitrite, chloride, arsenite, arsenate or uranium. In other words, the single-use capsule can reduce the total hardness or only the carbonate hardness (alkalinity) to such an extent that limescale precipitation from the treated water is reduced and/or can reduce the amount of heavy metals present in the water and/or can reduce anions such as nitrate, nitrite, chloride, arsenite, arsenate or uranyl anions.

Thus, the present invention may provide a solution for protection of hotwater dispensers from limescale, for creating water with an optimized water hardness for best coffee or tea taste, and for dispensing of drinking water with a lower water hardness and with a lower amount of heavy metals or other contaminants compared to the water at the point of use, e.g. the tap water. Furthermore, bacteria are removed by the capsule when a flat sheet ultrafiltration membrane is arranged therein. The invention may further be used for improving the water taste.

In the context of the application, the term "capsule" may refer to a small container which may for example enclose a volume between 5 ml and 50 ml. The single-use capsule described herein may have a similar structure as coffee capsules.

The capsule body may refer to an outer shell of the single-use capsule which may have a hollow interior. Furthermore, the capsule body may impermeably seal the inside of the capsule body from the outside of the capsule body. For example, the capsule body may be made out of plastic, bioplastic, and/or aluminum. However, the capsule body may also be structured such that the inside of the capsule body is not impermeably sealed from the outside of the capsule body. For example, the capsule body may be made of oriented or non-oriented synthetic fibers, and/or natural material such as cellulose.

The inlet side and the outlet side may refer to different sides of the capsule body. For example, the capsule body may substantially have the shape of a cylinder, a truncated cone, or a truncated pyramid and the inlet and outlet sides may be defined by the top and the bottom of the cylinder, truncated cone, or truncated pyramid, respectively. By "substantially" it is meant that there may be some deviations from the pure cylindrical or conical shape such as additional rims etc. In other words, the inlet side and the outlet side may be defined by opposite sides of the capsule body. Thus, when water is flowing through the capsule body, it is flowing into the capsule body through the inlet side and out of the capsule body through the outlet side.

In the inside of the capsule body, the single-use capsule may have a layered structure comprising at least two layers. The layers may have a planar extension and may be arranged vertically to the overall flowing direction of water through the single-use capsule, respectively. The different layers may further be separated by boundary layers such as filters, membranes, etc.

The first cavity may refer to a volume within the capsule body. The first cavity may be located between the inlet side and the outlet side such that water is flowing through the first cavity when it is flowing from the inlet side to the outlet side. Moreover, the first cavity may be delimited by a sidewall of the capsule body. Thus, the first cavity may at least partly be delimited by the capsule body. Consequently, there may be no need for a further structure for delimiting the first cavity (e.g. a bag). In other words, a part of the sidewall of the capsule body may be a boundary of the first cavity. However, it is also possible that the first cavity is defined by a further boundary material, for example by a plastic bag that is not necessarily connected with the sidewall of the capsule body. It may be understood that the first cavity is filled with the ion exchange element.

According to the present invention, the ion exchange element comprises a weak acid and/or strong acid cation exchange material, which is 100% in the hydrogen form. Furthermore, the ion exchange element may comprise at least one ion exchange material, for example, a weak acid cation exchange material, a strong acid cation exchange material, a weak basic anion exchange material, a strong basic anion exchange material, or a mixture thereof. Ion exchange materials are insoluble substances containing ions which are able to be exchanged with other ions in solutions, which come in contact with them. Depending on the employed ion exchange materials, the ion exchange element may reduce the carbonate water hardness (alkalinity), the total water hardness, the concentration of heavy metal ions and/or the concentration of other contaminants such as nitrate, nitrite, chloride, arsenate, arsenite and/or uranium.

For example, the concentration of scale-forming calcium and magnesium cations bound to bicarbonate (HCO₃⁻) can be reduced by using a weak acid cation exchange material. As a result, the carbonate water hardness (also known as water alkalinity) of the treated water may be reduced. Alternatively or additionally, the concentration of calcium and magnesium cations bound to sulphate, chloride, bicarbonate, phosphate, or nitrate anions can be reduced by using a strong acid cation exchange material. As a result, the total water hardness of the treated water may be reduced. It is to be noted that cation exchange materials can be in the hydrogen form, i.e. 100% of the ion exchanging sites are loaded with H⁺ ions, or it can at least partially be loaded with sodium, potassium or magnesium cations.

According to the present invention, the weak acid cation exchange material, the strong acid cation exchange material, or a mixture thereof, is in the hydrogen form. When water passes through the cation exchange material, scale-forming cations such as Ca²⁺ and Mg²⁺ are replaced by H⁺ ion. This may have the advantage that not only the concentration of calcium and magnesium cations is reduced in the treated water but also the concentration of carbonate anions, i.e. the treated water is decarbonated. Thereby, the pH of the treated water can be shifted to a lower value, which in turn leads to a shift of the lime-carbonic acid balance. As a result, the limescale precipitation may be reduced. Preferably, the pH value of the treated water is less than 6.8.

The single-use capsule of the present invention may further comprise at least one solid acid and/or at least one acid salt (i.e. an acid composition) within the first cavity and/or between the first cavity and the inlet side and/or between the first cavity and the outlet side. The acid composition may be mixed with the ion exchange materials of the ion exchange element or may be provided as a further layer, which may be arranged between the first cavity and the inlet side and/or between the first cavity and the outlet side. In case a flat sheet membrane filter is arranged within the capsule body, the acid composition may be mixed with the ion exchange materials of the ion exchange element or may be provided as a further layer, which may be arranged between the first cavity and the flat sheet membrane filter, between the inlet side and flat sheet membrane filter, or the flat sheet membrane filter and the outlet side.

According to the present invention, the single-use capsule comprises a flat sheet membrane filter arranged within the capsule body, wherein the flat sheet membrane filter has a pore size of 0.2 µm or lower. The flat sheet membrane filter may provide a bacterial barrier in the single-use capsule. In this way, it may be ensured that hygienic water is provided with the single-use capsule. The inventors have recognized that the use of a flat sheet membrane filter in the single-use capsule is advantageous since it is sufficiently capable of filtering bacteria from the water and takes up less space than, for example, a hollow fiber ultrafiltration membrane, which is typically used in PoU filters. Thus, the single-use capsule can have a compact size. The flat sheet membrane filter may comprise a material that is not biodegradable or that is biodegradable. For example, the flat sheet membrane filter may comprise or be made out of a material selected from the group consisting of nylon, regenerated cellulose, cellulose ester, cellulose nitrate, cellulose acetate, polyvinylidene fluoride, polyethersulfone, polycarbonate, polyamide, PTFE, and a combination thereof.

The flat sheet membrane filter may be a type of flat sheet membrane filters, which is typically used in microbiological analysis, and is, for example, commercially available from EMD Millipore Corporation, USA, or Sartorius AG, Germany.

According to a further exemplary embodiment of the invention, the flat sheet membrane filter is arranged between the first cavity and the inlet side and/or between the first cavity and the outlet side. The flat sheet membrane filter has a pore size of 0.2 µm or lower. Preferably, the flat sheet membrane filter can be an ultrafiltration membrane. As known to the skilled person, ultrafiltration membranes may have a pore size from 0.002 to 0.1 µm. In this way, bacteria may also be removed from the water flowing through the single-use capsule such that there are no bacteria in the treated water. Thus, additional contaminants may be removed from the water.

The single-use capsule may in other words comprise a container with a volume between 5 and 50 ml and may be constructed as a deep-drawn part or an injection molded part. The shape of the single-use capsule, i.e. the cross-section of the single-use capsule, may be circular, oval, quadrangular or polygonal. Thus, the single-use capsule may substantially be shaped as a cylinder, a truncated cone or a truncated pyramid. Circular or oval profiles of the single-use capsule may be advantageous as the inside of the single-use capsule or capsule body may comprise less or no spaces where the water does not flow through. In other words, the single-use capsule may have a shape which causes a uniform flow of water through the capsule body. In this way, a constant dissolution of the acid composition, if present, into the water may be provided. The capsule body may comprise plastic such as polypropylene (PP), polyethylene (PE), or plastic fleece with oriented or non-oriented fibers, natural materials such as abacá or other cellulose based materials, or degradable bioplastics or mixtures thereof.

If the single-use capsule is a deep-drawn part, the bottom part of the single-use capsule may be perforated and/or may comprise a synthetic or biodegradable fleece with oriented or non-oriented fibers. If the single-use capsule is an injection-molded part, the bottom of the single-use capsule may comprise defined openings provided via the used injection mould.

For example, the defined openings may have a pore size from 20 µm to 200 µm. If the bottom of the single-use capsule is produced by injection molding, the parts may comprise a supporting structure on which a paper filter or a fleece with oriented or non-oriented fibers is applied in a second production step of the single-use capsule.

In this respect, the bottom of the single-use capsule or capsule body may refer to the outlet side of the capsule body.

The top surface of the single-use capsule, which may be referred to as the inlet side of the capsule body, may be provided by a non-perforated foil, which may only be perforated by a receiving device when the single-use capsule is inserted into the receiving device. The foil may be glued or ultrasonically welded to the inlet side of the capsule body. In order to control or direct the water flow through the capsule body, the openings in the inlet and/or the outlet sides may be specifically designed, e.g. unevenly distributed. Furthermore, if the top surface of the single-use capsule is an injection-molded part, the top surface of the single-use capsule may comprise defined openings provided via the used injection mold.

Furthermore, between the top surface, i.e. the inlet side, and the bottom surface, i.e. the outlet side, the capsule body may comprise at least one layer comprising an ion exchange element. Preferably the capsule body may comprise at least two different layers. The first layer may comprise an ion exchange element and the second layer may comprise the flat sheet membrane filter. Between the top surface and the first layer, the capsule may further comprise a paper filter or a fleece with oriented or non-oriented fibers for distributing the inflowing water and/or for preventing that particles exit the single-use capsule (i.e. a filter layer) and/or for preventing that particles from the feed water enter the capsule. Thus, this filter layer may also be referred to as water distribution layer. The filter layer may comprise a fibrous material, for example, a fleece. The fleece may contain fibers made of synthetic polymers such as polypropylene (PP), polyester, or polyethylene (PE), fibers from natural polymers such as viscose, natural fibers such as cellulose based fibers, or composites of fibers of natural polymers and synthetic polymers.

According to an exemplary embodiment, the capsule body may have the shape of a rotationally symmetric body, preferably a cylinder, a truncated cone, or a truncated pyramid. In this case, the inlet and outlet sides of the capsule body may be defined by top and bottom surfaces of the rotationally symmetric body and the capsule body may comprise a sidewall that is defined by a shell surface of the rotationally symmetric body.

In the context of the application, a rotationally symmetric body may also refer to a body that is only symmetric under discrete rotations smaller than 360°. A pyramid may for example be rotationally symmetric under discrete rotations of 90° and multiples thereof and is therefore understood to be a rotationally symmetric body.

According to an exemplary embodiment of the invention, the single-use capsule is configured for treating only less than 5 liters of water, preferably only less than 4 liters of water, more preferably only less than 3 liters of water, and most preferably only less than 2 liters of water. According to one embodiment, the single-use capsule is configured for treating 25 ml, 125 ml, 250 ml, 300 ml, 400 ml, 500 ml, 750 ml, or 1000 ml of water, preferably 1000 ml.

In this way, it is ensured that the single-use capsule is configured for a single use. Thus, the single-use capsule can only be used for a short time period before it is discarded. This avoids contamination and accumulation of bacteria and other pathogens within the single-use capsule. Furthermore, due to the single-use of the inventive capsule it is possible to produce the capsule body and other elements of the single-use capsule, for example, the housing from biodegradable materials. Moreover, it is possible to employ anion exchange materials, which are typically avoided in conventional point of use filter cartridges due to their high susceptibility for bacterial contamination.

According to the present invention, the flat sheet membrane filter has a pore size of 0.2 µm or less, and is preferably an ultrafiltration flat sheet membrane filter. By providing a flat sheet membrane filter with a pore size of below 0.2 µm or less it is ensured that bacteria are removed from the water and retained on the membrane filter.

According to an exemplary embodiment of the invention, the flat sheet membrane filter has a thickness below 2 mm, preferably between 0.1 mm and 1 mm. In this way, the flat sheet membrane filter does not take up much space in the single-use capsule such that the single-use capsule has a compact size.

According to an exemplary embodiment of the invention, the first cavity has a volume between 3 ml and 48 ml, preferably between 4 ml and 30 ml, and most preferably between 5 ml and 20 ml.

In this way, a single-use capsule is provided, i.e. a capsule that can only be used for filtering water during one single use. As described before, this prevents bacterial contamination of the single-use capsule.

According to an exemplary embodiment of the invention, the single-use capsule further comprises a first filter layer arranged between the first cavity and the inlet side and/or a second filter layer arranged between the first cavity and the outlet side.

In the context of the present application, the filter layer may also be referred to as the water distribution layer if the filter layer is arranged between the first cavity and the inlet side. Furthermore, the filter layer may prevent that solid particles such as granules of the ion exchange element fall out of the single-use capsule and/or may prevent that particles from the piping system enter the capsule (fine or particle filtration of the feed water). Furthermore, the filter layer may cause that the water inflowing through the inlet side is distributed over a larger surface of the ion exchange element such that the filtering capacity of the single-use capsule is improved. The filter layer may be a paper filter or a mesh or may comprise a fleece. The mesh or the fleece may comprise synthetic fibers such as polypropylene (PP) and/or polyethylene (PE), and/or polyester (PES) or natural fibers such as cellulose and/or composite fibers comprising natural and synthetic fibers.

According to an exemplary embodiment of the invention, the first and/or second filter layer comprises a fibrous material. The fibrous material of the first and/or second filter layer has a pore size between 0.5 µm and 200 µm, preferably between 10 µm and 150 µm, and most preferably between 50 µm and 100 µm. Alternatively or additionally, the fibrous material of the first and/or second filter layer has a specific weight between 10 g/m² and 100 g/m², preferably between 20 g/m² and 80 g/m², and most preferably between 30 g/m² and 50 g/m². Alternatively or additionally, the first and/or second filter layer has a thickness below 5 mm, preferably below 3 mm.

The pore size is measured according to ASTM D6767 or ASTM D4751. It has been discovered that such parameters provide an optimal functioning of the filter layer. I.e., it is ensured that the filter layer at the same time prevents that solid particles are falling out of the single-use capsule and ensures that the water is evenly distributed over the first cavity.

According to an exemplary embodiment of the invention, the inlet side and/or the outlet side comprises openings that are smaller than 500 µm, preferably 200 µm.

In this way, the openings on the inlet and/or outlet side are small enough such that particles (e.g. a granular ion exchange element) arranged in the inside of the capsule body do not fall out of the capsule body. Thus, by providing such small openings, it may not be necessary to arrange filter layers within the capsule body, especially when only an ion exchange resin is used. If the single-use capsule comprises an acid composition comprising at least one acid and/or at least one acid salt, it may be preferred to use a paper filter or a fleece with a pore size lower than 100 µm, preferably 10 µm in order to prevent that solid acid composition particles fall out of the capsule body.

According to the present invention, the first cavity comprises an ion exchange element as defined in claim 1. The ion exchange element may also be referred to as the ion exchanger. According to the present invention, the ion exchange element comprises a weak acid and/or strong acid cation exchange material. According to a further exemplary embodiment of the invention, the ion exchange element may comprise a mixture of a weak acid and a strong acid cation exchange material.

According to the present invention, the ion exchange element comprises weak acid and/or strong acid cation exchange material, which is 100% in the hydrogen form. According to a preferred embodiment, the ion exchange element comprises a weak acid cation exchange material, which is 100% in the hydrogen form. According to another example, the ion exchange element comprises a weak acid and/or strong acid cation exchange material, which is loaded with sodium, potassium or magnesium cations up to 50% of the total capacity of the weak acid and/or strong acid cation exchange material.

By using a weak acid and/or a strong acid cation exchange material, the concentration of scale-forming cations such as Ca²⁺ and Mg²⁺ in the water that flows through the inventive single-use capsule can be reduced. When water passes through the cation exchange material, the scale-forming cations Ca²⁺ and Mg²⁺ may be replaced by cations, by which the cation exchange material is loaded, for example, by H⁺, Na⁺ or K⁺. By using a weak acid cation exchanger, the alkalinity (carbonate hardness) of the water can be reduced. By using a strong acid cation exchanger, the total hardness of the water is reduced, i.e. the water is softened. If the ion exchange material is loaded with Mg²⁺ than only the concentration of Ca²⁺ can be reduced and the calcium cations are replaced by Mg²⁺. As a result, the treated water has a lower tendency for lime precipitation.

Furthermore, by providing the weak acid cation exchange material and/or the strong acid cation exchange material 100% in the hydrogen form, not only the concentration of calcium and magnesium cations is reduced in the treated water but also the concentration of carbonate anions, i.e. the treated water is decarbonated. Thereby, the pH of the treated water can be shifted to a lower value, which in turn leads to a shift of the lime-carbonic acid balance. It was found by the inventors of the present application that the decarbonation of the water achieved by the inventive single-use capsules is sufficient in order to prevent lime precipitation from the treated water up to water temperatures of 120°C. Thus, the inventive single-use capsules can be used for limescale protection. In particular, it was found that the use of a weak acid cation exchange material being 100% in the hydrogen form is especially advantageous. Another advantage of using the weak acid cation exchange material and/or the strong acid cation exchange material 100% in the hydrogen form is that the concentration of sodium, potassium or magnesium cations in the treated water is not increased, i.e. no additional ions are added to the treated water.

The ion exchange element may also provide the advantage that heavy metals can be removed from the water. Examples of heavy metal cations, the concentration of which can be reduced by weak acid and/or strong acid cation exchange materials are cations of mercury, lithium, cadmium, cesium, silver, manganese, zinc, copper, nickel, cobalt, strontium, or lead. It is also possible to reduce the concentration of aluminium cations or ammonium cations with said cation exchange materials.

The ion exchange element may comprise an anion exchange material, for example, in order to reduce the concentration of unwanted anions such as nitrate, nitrite, chloride, fluoride, arsenate, arsenite, or uranium. The anion exchange material may comprise a weak base and/or strong base anion exchange material. Preferably, the weak base and/or strong base anion exchange material may be provided by 100% in the hydroxide form, i.e. the OH⁻ form, or may be loaded with chloride anions or sulfate anions up to 100% of the total capacity of the weak base and/or strong base anion exchange material. Examples of anions, the concentration of which can be reduced by weak base and/or strong base anion exchange materials are fluoride, chloride, bromide, iodide, nitrate, nitrite, sulfate, phosphate, chromate, arsenic anions or uranyl anions. Nitrate can, for example, be removed by using a strong base anion exchange material in the chloride form, uranium can be removed by using a strong base anion exchange element in the sulfate form and arsenic anions can be removed by an anion exchange element which is treated with iron oxide.

In case the ion exchange element comprises two or more ion exchange materials, e.g. a weak acid cation exchange material and a strong acid cation exchange material and/or an anion exchange material, the ion exchange materials may be packed into the ion exchange element in form of alternating beds of ion exchange materials. Alternatively, the ion exchange materials may be packed in form of a mixed bed.

Suitable ion exchange materials are known to the skilled person and the skilled person will select the ion exchange materials according to the intended use. Examples for ion exchange materials are cross-linked polystyrenes, wherein the actual ion exchanging sites are introduced after polymerization. The main types of ion exchange resins may be distinguished by their functional groups (i.e. the ion exchanging sites). Strong acid cation exchangers typically comprise sulfonic acid groups, and can be made from materials such as sodium polystyrene sulfonate or poly AMPS (poly(2-acrylamido-2-methyl-1-propanesulfonic acid)). Strong base anion exchangers typically contain quaternary amino groups, for example, trimethylammonium groups. An example of a strong base anion exchanger is polyAPTAC (poly (acrylamido-N-propyltrimethylammonium chloride)). Weak acid cation exchangers typically contain carboxylic acid groups, and weak base anion exchangers typically contain primary, secondary, and/or ternary amino groups, e.g. polyethylene amine. Usually the ion exchange material is employed in form of small beads, granules, and/or fibers.

According to an exemplary embodiment of the invention, the single-use capsule further comprises a flow limiting structure for limiting the water flow through the single-use capsule below 150 l/h (2.5 l/min), preferably below 100 l/h (1.67 l/min), most preferably below 40 l/h (0.66 l/min).

In other words, the single-use capsule may be configured for limiting the water flow through the single-use capsule below 150 l/h, preferably below 100 l/h, and most preferably below 40 l/h, at typical pressures in water pipes. The flow limiting structure may be provided at the inlet side and/or at the outlet side of the single-use capsule. The flow limiting structure may for example be a throttle. Furthermore, the single-use capsule may comprise a flow limiting structure and at least a first or second filter layer. For example, the single-use capsule may comprise a flow limiting structure arranged at the inlet side and the first filter layer for distributing the water over the ion exchange element. According to one embodiment, the flow limiting structure is a flow limiter, i.e. the diameter of the inlet for feed water and the outlet for treated water is strongly reduced so that only a minor amount of water can flow through the capsule within a specific time period. In this way, it is ensured that the water flow through the single-use capsule is low enough to provide an optimal water treatment.

According to an exemplary embodiment of the invention, the single-use capsule further comprises an activated carbon element located within the capsule body.

The activated carbon element may be arranged between the inlet side and the first cavity and/or between the outlet side and the first cavity. According to a further exemplary embodiment, the activated carbon element is arranged within the first cavity and/or is mixed with the ion exchange element. According to a further exemplary embodiment, the activated carbon element is arranged within the first cavity. Furthermore, the activated carbon element may be mixed with the ion exchange element. The activated carbon element may be provided in a granulated form, in form of pellets, in form of an activated carbon fleece, and/or in form of pressed activated carbon.

In this way, unwanted odorous substances and flavors such as chlorine can be removed from the water, and the taste, smell and appearance of water can be improved.

According to one embodiment of the invention, the single-use capsule does not comprise silver, silver alloys or silver compounds. Examples for silver, silver alloys or silver compounds are silver nanoparticles, colloidal silver, copper-silver alloy, silver nitrate, silver sulfide, or silver chloride.

The inventors have recognized that the addition of silver, silver alloys or silver compounds is not necessary, because the single-use capsule is provided for a single use only. Due to the short period of use, a contamination of the capsule with bacteria and other pathogens can be avoided. Furthermore, the flat sheet membrane may prevent that bacteria and other pathogens, which are already present in the water to be treated, are released into the treated water.

According to an exemplary embodiment of the invention, the inlet side and/or the outlet side is/are sealed with a punctuable foil.

In this way, the single-use capsule may be impermeably sealed and the openings in the single-use capsule may only be provided, when the single-use capsule is inserted in receiving device described in the context of the invention. In this way, it is guaranteed that the single-use capsule is not contaminated. For example, the capsule body may be an injection molded or deep drawn part with openings on the inlet and outlet side. These openings may be sealed with a punctuable foil, respectively. Said openings may further comprise a supporting structure for the foil such as struts for attaching (i.e. gluing, ultrasonically welding) the foil on top of the openings.

According to an exemplary embodiment of the invention, the capsule body is made of a material selected from the group consisting of plastic, bioplastic, oriented or non-oriented synthetic fibers, natural material, cellulose, aluminum, and mixtures thereof.

In the context of the present invention, the term "bioplastic" refers to a plastic derived from renewable biomass sources, such as vegetable fats and oils, corn starch, or microbiota. Bioplastic can be made from agricultural byproducts and also from used plastic bottles and other containers using microorganisms. Depending on its structure, biodegradable bioplastic may break down in either anaerobic or aerobic environments. Examples for bioplastic are starch-based plastic, cellulose-based plastic, polylactic acid, poly-3-hydroxybutyrate, polyhydroxyalkanoate, polyamide 11, or bio-derived polyethylene.

According to an exemplary embodiment of the invention, the single-use capsule further comprises an acid composition comprising at least one acid and/or at least one acid salt within the first cavity and/or between the first cavity and the inlet side and/or between the first cavity and the outlet side.

The acid composition may be provided as a layer that is arranged between the inlet side and the ion exchange material or between the ion exchanger and the outlet side, preferably between the ion exchanger and the outlet side. In case a flat sheet membrane filter is arranged within the capsule body, the acid composition may be provided between the first cavity and the flat sheet membrane filter, between the inlet side and flat sheet membrane filter, or the outlet side and the flat sheet membrane filter. Alternatively, the acid composition may be located within the first cavity and/or be mixed with the ion exchange element.

According to one embodiment, the acid composition can comprise at least one acid selected from the group consisting of ascorbic acid, citric acid, fumaric acid, maleic acid, malic acid, tartaric acid, and mixtures thereof. Additionally or alternatively, the acid composition can comprise at least one acid salt, preferably Cl⁻, SO₄²⁻ or H₂PO₄⁻. According to a preferred embodiment the acid composition comprises citric acid and/or a malic acid.

According to an exemplary embodiment of the invention, the acid composition is in a solid form. For example, the acid composition can be in form of a powder, a granulate, flakes, or a tablet. The skilled person will select the solid form according to the size of the inventive capsule and the desired dissolution profile of the acid composition.

According to a further exemplary embodiment of the invention, the capsule of the present invention comprises an impermeable, punctuable bag and the acid composition is provided in a liquid form and is enclosed by the impermeable, punctuable bag. In this way, when the single-use capsule is inserted in the beverage dispensing device, the impermeable, punctuable bag may be punctuated by the beverage dispensing device such that the liquid acid composition is released into the water flowing through the capsule body.

According to one embodiment the liquid acid composition comprises at least one acid and/or at least one acid salt and water. The liquid acid composition may have a solids content from 1 to 95 wt.-% salt composition, based on the total weight of the liquid salt composition, preferably from 10 to 90 wt.-%, more preferably from 20 to 85 wt.-%, and most preferably from 30 to 80 wt.-%.

According to a further exemplary embodiment, the capsule further comprises a second cavity between the first cavity and the outlet side, wherein the second cavity comprises a beverage base. In case a flat sheet membrane filter is present between the first cavity and the outlet side, the second cavity is preferably present between the flat sheet membrane filter and the outlet side.

The beverage base may be selected from the group consisting of espresso, coffee, tea, a soluble beverage powder, a liquid beverage concentrate, mineral salts, trace-elements, vitamins, amino acids, plant extracts, herbal extracts, folic acids, flavoring, and mixtures thereof.

Examples for soluble beverage powders are instant coffee, instant tee, instant soup, powdered milk, cocoa drink powder, lemonade powder, flavored drink mix powder, herb powder, fruit powder, spice powder, protein powder, sport drink powder, freeze-dried fruit powders, freeze-dried vegetable powders, smoothie powder, or vitamin powder. Examples for liquid beverage concentrates are coffee concentrate, tee concentrate, flavor emulsion, fruit syrup, herb syrup, spice syrup, lemonade concentrate, flavored drink concentrate, or vitamin concentrate.

"Mineral salts" in the meaning of the present invention are inorganic salts that need to be ingested or absorbed by living organisms for healthy grow and maintenance. The mineral salts may be preferably selected from the group consisting of alkali or alkaline earth salts, limestone, lime, dolomite, clay minerals, natural zeolites, and mixtures thereof. In particular, all mineral salts can be used, which may be found in drinking water, spring water, ground water, or mineral water. Examples for alkali or alkaline earth salts are sodium, potassium, magnesium and calcium salts, preferably the alkali or alkaline earth salts are selected from the group consisting of potassium chloride, potassium bicarbonate, potassium sulfate, potassium citrate, sodium chloride, sodium bicarbonate, sodium sulfate, sodium citrate, magnesium chloride, magnesium sulfate, magnesium carbonate, magnesium citrate, magnesium lactate, magnesium gluconate, magnesium lactatgluconate, calcium chloride, calcium sulfate, calcium carbonate, calcium citrate, calcium lactate, calcium gluconate, calcium lactatgluconate, and mixtures thereof. Examples of trace elements are lithium, selenium, zinc, iron, phosphate, iodide, or molybdenum. Examples of vitamins are vitamin A, beta carotene, vitamin B1, vitamin B2, vitamin B3, vitamin B5, vitamin B6, vitamin B12, biotin, vitamin C, vitamin D, vitamin E, or vitamin K. However, it is clear that the present invention is not limited to the foregoing beverage base materials.

According to an exemplary embodiment of the invention, the capsule body has a volume between 5 ml and 50 ml, preferably between 8 ml and 40 ml, and most preferably between 10 ml and 25 ml.

In this way, a single-use capsule is provided, i.e. a capsule that should or can only be used for filtering water during one single use. As described before, this prevents that bacteria grow in the single-use capsule.

A second aspect of the invention relates to a receiving device for receiving a single-use capsule described in the context of the present invention. The receiving device comprises a single-use capsule described in the context of the present invention. Furthermore, the receiving device is configured for guiding water through the single-use capsule for treating the water.

The receiving device may, for example, be provided at a water faucet, a coffee machine, a vending machine, or a water dispenser. In this way, these devices do not need to be equipped with filter cartridges which may be contaminated with bacteria.

According to an exemplary embodiment of the invention, the receiving device further comprises a flow limiting device configured for limiting the water flow through the single-use capsule below 150 l/h, preferably below 100 l/h, and more preferably below 40 l/h.

In this way, it is ensured that the water flow through the single-use capsule is low enough to provide an optimal treatment capacity.

According to an exemplary embodiment of the invention, the receiving device is configured for being attached to a water pipe, preferably to a water faucet such that water of the water pipe flows through the single use capsule in the receiving device.

In this way, the water faucet can be configured such that it releases treated water. Furthermore, the single-use capsule can easily be replaced in the receiving device.

A further aspect of the invention relates to a beverage dispensing device comprising a receiving device for receiving a single-use capsule described in the context of the present invention. The receiving device comprises single-use capsule described in the context of the present invention. Furthermore, the receiving device is configured for guiding water through the single-use capsule for treating the water.

According to an exemplary embodiment of the invention, the beverage dispensing device further comprises a second receiving device configured for receiving a second capsule. The second capsule comprises a beverage base such as coffee, espresso, tea, lemonade, etc.

In this way, the beverage dispenser may be configured for receiving two different capsules at the same time, a first single-use capsule as described in the context of the application and a second capsule comprising the beverage base as described in the context of the application.

These and other aspects of the invention will be apparent from and elucidated with reference to the embodiments described hereinafter.

### Brief description of the figures

Fig. 1A and 1B each show a single-use capsule according to an exemplary embodiment of the invention, respectively.
Fig. 2 shows a single-use capsule according to an exemplary embodiment of the invention.
Fig. 3A and 3B each show a single-use capsule according to a further exemplary embodiment of the invention, respectively.
Fig. 4A and 4B each show a single-use capsule according to a further exemplary embodiment of the invention, respectively.
Fig. 5A and 5B each show a single-use capsule according to a further exemplary embodiment of the invention, respectively.
Fig. 6A and 6B each show a receiving device according to a further exemplary embodiment of the invention, respectively.
Fig. 7 shows a beverage dispenser according to a further exemplary embodiment of the invention.

It shall be noted that the figures are not necessarily drawn to scale. Furthermore, if the same reference signs are used in different figures, they may refer to the same or to similar elements. The same or similar elements may however also be designated with different reference signs.

### Detailed description of the figures

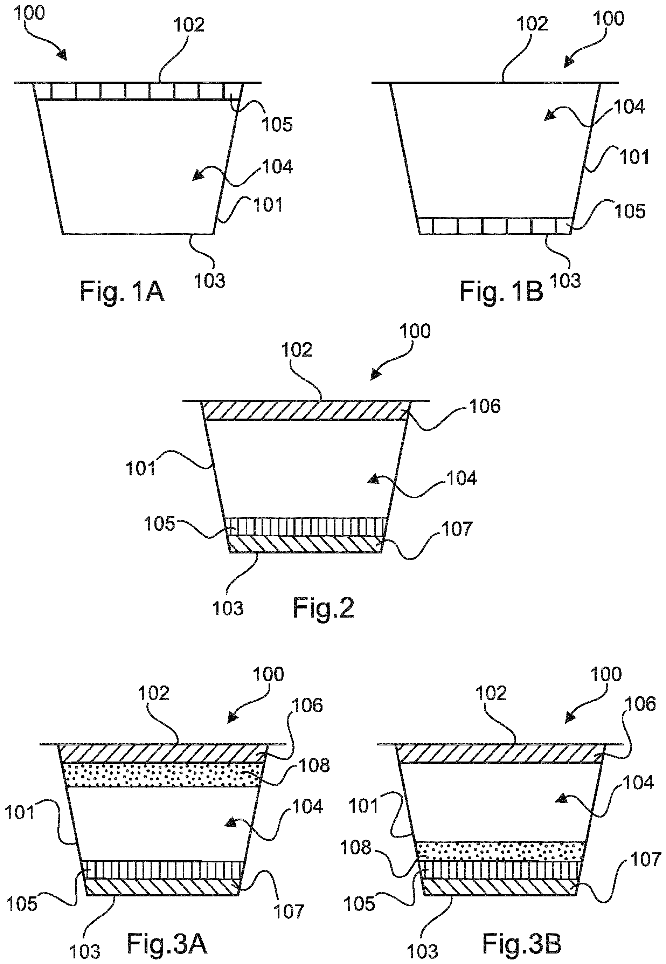

Fig. 1A and 1B each show a single-use capsule for treating water according to an exemplary embodiment of the invention. The single-use capsule 100 comprises a capsule body 101 defining an inlet side 102 and an outlet side 103. Furthermore, the single-use capsule 100 comprises a first cavity 104 which is located within the capsule body 101 and comprises an ion exchange element. The single-use capsule further comprises a flat sheet membrane filter 105. The flat sheet membrane filter 105 is configured for removing bacteria from water flowing through the capsule body 101. In Fig. 1A it is shown that the flat sheet membrane filter is arranged between the first cavity 104 and the inlet side 102 and in Fig. 1B it is shown that the flat sheet membrane filter 105 is arranged between the first cavity 104 and the outlet side 103.

In other words, the single-use capsule 100 has a layered structure within the capsule body 101 wherein according to the exemplary embodiment of Fig. 1A the upper layer is composed by the flat sheet membrane filter 105 and the lower layer comprises first cavity 104 with the ion exchange element, whereas according to the exemplary embodiment of Fig. 1B the upper layer comprises the first cavity 104 and the lower layer comprises the flat sheet membrane filter 105. These layers may be vertically arranged with regard to the overall water flow from the inlet side 102 to the outlet side 103. In the exemplary embodiments of Figs. 1A, 1B, 2, 3A, 3B, 4A, and 4B, it is shown that the capsule body 101 has the shape of a truncated cone, wherein the inlet side 102 is defined by the bottom surface of the truncated cone and the outlet side 103 is defined by the top surface of the truncated cone. Although, these exemplary embodiments shows a capsule body in the shape of a truncated cone, also other shapes are possible, for example any rotational symmetric body such as a cylinder, a truncated cone, a truncated pyramid, etc. Thus, the bottom and top surfaces of the capsule body 101 may also have a non-circular shape such as an oval shape, a quadratic or polygonal shape. The capsule body 101 may be made of a material that is selected from the group consisting of plastic, bioplastic, oriented or non-oriented synthetic fibers, natural material such as cellulose, and mixtures thereof. The volume of the capsule body 101 may be between 5 ml and 50 ml, preferably between 8 ml and 40 ml, most preferably between 10 ml and 25 ml. The single-use capsule 100 may be configured for treating only less than 5 liters of water, preferably only less 4 liters of water, more preferably only less than 3 liters of water, and most preferably only less than 2 liters of water. Furthermore, the single-use capsule 100 may not comprise any silver, silver alloys or silver compounds such that no silver is released to the water. The inlet side 102 and/or the outlet side 103 of the capsule body 101 may define openings that are smaller than 500 µm, preferably smaller than 200 µm such that it is not necessary to provide additional filter layers as shown in the exemplary embodiment of Fig. 2.

The first cavity may have a volume between 3 ml and 48 ml, preferably between 4 ml and 30 ml, and most preferably between 5 ml and 20 ml. The flat sheet membrane filter 105 may be an ultrafiltration membrane and may have a pore size of 0.2 µm or less. Furthermore, the flat sheet membrane filter 105 may have a thickness below 2 mm, preferably between 0,1 mm and 1 mm. The flat sheet membrane filter 105 acts as a bacteria barrier in the single-use capsule 100. The ion exchange material may comprise a weak acid and/or strong acid cation exchange material.

Fig. 2 shows a single-use capsule 100 according to a further exemplary embodiment of the invention. In addition to the single-use capsule shown in Figs. 1A and 1B, the single-use capsule 100 comprises first and second filter layers 106 and 107. The first filter layer 106 is arranged between the inlet side 102 and the first cavity 104 and the second filter layer 107 is arranged between the outlet side 103 and the first cavity. According to this exemplary embodiment, the flat sheet membrane filter is arranged between the first cavity 104 and the second filter layer 107. However, the flat sheet membrane filter may also be arranged at other positions such as between the first filter layer 106 and the first cavity 104, between the inlet side 102 and the first filter layer 106, and/or between the second filter layer 107 and the outlet side 103. The first and/or the second filter layer may comprise a fibrous material. The fibrous material may have a pore size between 0.5 µm and 200 µm, preferably between 10 µm and 150 µm, and most preferably between 50 µm and 100 µm. Alternatively or additionally, the fibrous material of the first and/or second filter layer may have a specific weight between 10 g/m² and 100 g/m², preferably between 20 g/m² and 80 g/m², and most preferably between 30 g/m² and 50 g/m². Additionally or alternatively the first and/or second filter layer may have a thickness below 5 mm, preferably below 2 mm.

Figs. 3A and 3B show single-use capsules 100 according to further exemplary embodiments of the invention. The single-use capsules 100 comprise a first cavity 104 with an ion exchange element, a flat sheet membrane filter 105, first and second filter layers 106 and 107, as well as an activated carbon element 108. According to the exemplary embodiment of Fig. 3A, the activated carbon element 108 is arranged between the first filter layer 106 and the first cavity 104. The flat sheet membrane filter 105 is arranged between the first cavity 104 and the second filter layer 107. Viewed from the inlet side 102 to the outlet side 103, the activated carbon element 108 is arranged after the first filter layer 106, the first cavity 104 is arranged after the activated carbon element 108, the flat sheet membrane filter 105 is arranged after the first cavity 104 and the second filter layer 107 is arranged after the flat sheet membrane filter 105. According to the exemplary embodiment of Fig. 3B, the flat sheet membrane filter 105 is arranged between the first cavity 104 and the second filter layer 107 and the activated carbon element 108 is arranged between the first cavity 104 and the flat sheet membrane filter. Viewed from the inlet side 102 to the outlet side 103, the first cavity 104 is arranged after the first filter layer 106, the activated carbon element 108 is arranged after the first cavity 104, the flat sheet membrane filter 105 is arranged after the activated carbon element 108 and the second filter layer 107 is arranged after the flat sheet membrane filter 105. However, also other arrangements of the different layers 104, 105, 106, 107, and 108 are possible. Furthermore, the single-use capsule 100 may also be provided without the first and second filter layers 106 and 107 or with only one of the first and second filter layers 106 and 107. For example, the inlet side 102 and/or the outlet side 103 may comprise openings that are smaller than 500 µm, preferably smaller than 200 µm, as described in the context of Figs. 1A and 1B instead of having filter layers.

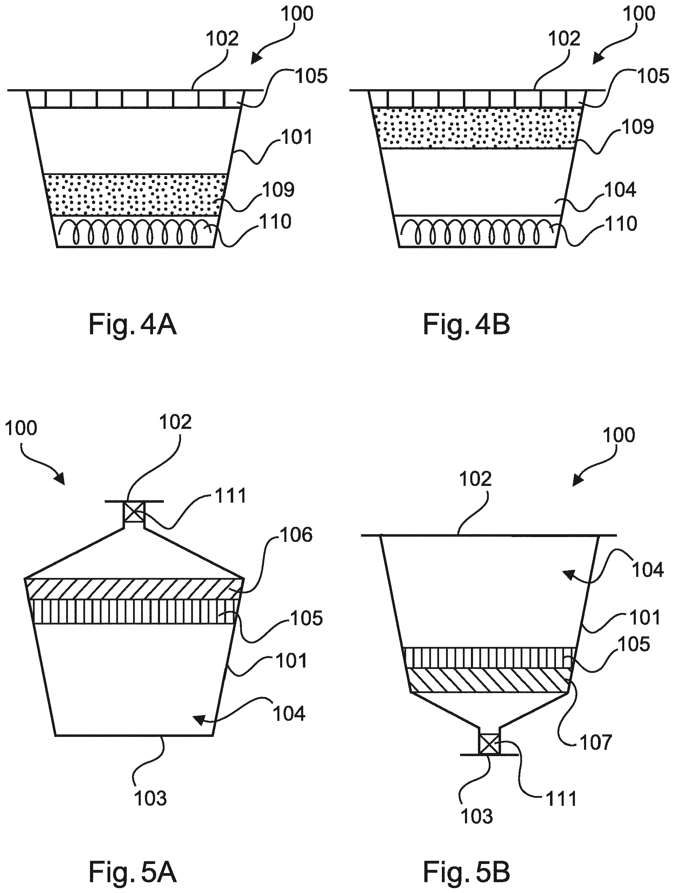

In Figs. 4A and 4B single-use capsules 100 according to further exemplary embodiments of the invention are shown. The single-use capsules 100 shown in Figs. 4A and 4B comprise a first cavity 104, a flat sheet membrane filter 105 and an acid composition 109, respectively. According to these exemplary embodiments, the acid salt composition 109 is arranged as a layer in the capsule body 101. However, the acid composition 109 may also be located within the first cavity 104 and/or be mixed with the ion exchange element. The acid composition may as an alternative be situated before the first cavity 104 containing the ion exchanger. The acid composition may comprise ascorbic acid, citric acid, fumaric acid, maleic acid, malic acid, tartaric acid, and mixtures thereof. The capsule may further comprise a fleece 110 in order to retain solid acid composition particles within the capsule. The single-use capsule shown in Fig. 4B shows an embodiment, wherein the acid composition layer 109 is arranged between the flat sheet membrane filter 105 and the first cavity 104. In the exemplary embodiments shown in Figs. 4A and 4B, the acid composition 109 is provided in a solid form. However, the acid composition may also be provided in a liquid form and, e.g., be arranged within a punctuable bag.

Figs. 5A and 5B each show a single-use capsule 100 according to a further exemplary embodiment, which single-use capsule 100 additionally comprises a flow limiting structure 111 that is configured for limiting the water flow through the single-use capsule below 150 l/h, preferably below 100 l/h, most preferably below 40 l/h. The flow limiting structure 111 may be a throttle. In Fig. 5A, it is shown that the flow limiting structure 111 is arranged at the inlet side 102 and in Fig. 5B it is shown that the flow limiting structure 111 is arranged at the outlet side 103.

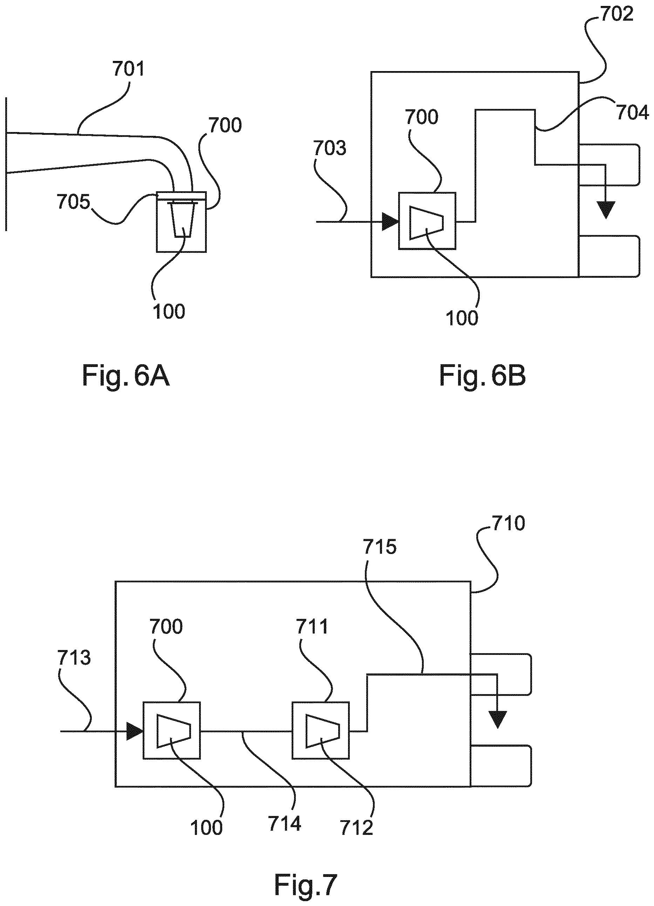

In Figs. 6A and 6B, a receiving device 700 according to an exemplary embodiment is shown, respectively. The receiving device 700 is configured for receiving the single-use capsule 100 and for guiding water through the single-use capsule 100 for treating the water. In Fig. 6A it is shown that the receiving device 700 is installed at the end of a water faucet 701. The receiving device further comprises a flow limiting device 705. In Fig. 6B, it is shown that the receiving device 700 is provided in beverage dispensing device 702, e.g. a coffee machine. The beverage dispensing device 702 may be configured for guiding water 703 through the receiving device 700 such that treated water 704 is provided for preparing the beverage.

Fig. 7 shows a beverage dispenser 710 according to a further exemplary embodiment of the invention. The beverage dispensing device 710 comprises a first receiving device 700 configured for receiving a single-use capsule 100 for treating water. Furthermore, the beverage dispensing device comprises a second receiving device 711 configured for receiving a second capsule 712. The second capsule for example comprises a beverage base such as coffee, tea, lemonade, etc. The first and second receiving devices 700, 711 are arranged such that water 713 first flows through the first receiving device 700 and the first capsule 100 and subsequently through the second receiving device 711 and the second capsule 712. The first capsule 700 treats the incoming water 713 such that treated water (e.g. purified, decarbonized and/or softened) 714 is provided. The second capsule 712 adds the beverage base to the treated water 714 such that a beverage 715 is provided by the beverage dispensing device 710.

While the invention has been illustrated and described in detail in the drawings and the foregoing description, such drawings and description are to be considered illustrative or exemplary and not restrictive. Thus, the invention is not limited to the disclosed embodiments. Other variations to the disclosed embodiments can be understood and effected by those skilled in the art in practicing the claimed invention from a study of the drawings, the disclosure, and the appended claims.

In the claims, the word "comprising" does not exclude other elements or steps, and the indefinite article "a" or "an" does not exclude a plurality. The mere fact that the certain measures are recited in mutually different dependent claims does not indicate that a combination of these measures cannot be used to advantage. Any reference signs in the claims should not be construed as limiting the scope.

### Examples

### 1. Measurement methods

In the following, measurement methods implemented in the examples are described.

### Water hardness

The carbonate hardness (alkalinity) and total hardness of the feed water and the carbonate hardness of the treated water was determined at room temperature using a Tetra GH/TH Testkit (Tetra GmbH, Germany).

### pH

The pH value of the feed water and the treated water was determined at room temperature using the Greisinger pH Meter GPH 114 and the electrode GE 114 (GHM Messtechnik GmbH, Germany).

### Conductivity

The conductivity of the feed water and the treated water was determined at room temperature using the Geisinger conductivity meter GLF 100 (GHM Messtechnik GmbH, Germany).

### 2. Materials

### Capsule 1

Cylindric capsule dimensions: inner diameter: 25 mm; outer diameter: 30 mm; height: 30 mm.

Ion exchange element material: weak acid cation exchanger in H⁺ form based on crosslinked polyacrylate (Lewatit® S8227, LanXess AG, Germany).

Ion exchange element volume: 10 ml.
Capsule body material: Polyethylene (PE).

In the inlet and outlet of the capsule a PE fleece (Viledon, Freudenberg AG, Germany) was installed, and an ultrafiltration membrane (Sartorius cellulose acetate membrane type 111, diameter 25 mm, pore size 0.2 µm, Sartorius AG, Germany) was installed between the inlet fleece and the ion exchange element.

### Capsule 2

Cylindric capsule dimensions: inner diameter: 20 mm; outer diameter: 25 mm; height: 50 mm.

Ion exchange element material: weak acid cation exchanger in H⁺ form based on crosslinked polyacrylate (Lewatit® S8227, LanXess AG, Germany).

Ion exchange element volume: 15 ml.

Capsule body material: Polyethylene (PE).

In the inlet and outlet of the capsule a PE fleece (Viledon, Freudenberg AG, Germany) was installed, and an ultrafiltration membrane (Sartorius cellulose acetate membrane type 111, diameter 20 mm, pore size 0.2 µm, Sartorius AG, Germany) was installed between the inlet fleece and the ion exchange element.

### Capsule 3

Cylindric capsule dimensions: inner diameter: 20 mm; outer diameter: 25 mm; height: 50 mm.

Ion exchange element material: weak acid cation exchanger in H⁺ form based on crosslinked polyacrylate (Lewatit® S8227, LanXess AG, Germany).
Ion exchange element volume: 15 ml.

Capsule body material: Polyethylene (PE).

In the inlet and outlet of the capsule a PE fleece (Viledon, Freudenberg AG, Germany) was installed, and an ultrafiltration membrane (Sartorius cellulose acetate membrane type 111, diameter 20 mm, pore size 0.2 µm, Sartorius AG, Germany) was installed between the inlet fleece and the ion exchange element. Furthermore, a layer containing 0.5 g ascorbic acid was installed between the ion exchange element and the fleece at the outlet of the capsule.

### Feed water 1

| | |
|---|---|
| Conductivity: | 385 µS/cm |
| pH: | 7.5 |
| Carbonate hardness: | 11°dKH, 1.96 mmol/l |
| Total hardness: | 13°dH; 2.32 mmol/l. |

### Feed water 2

| | |
|---|---|
| Conductivity: | 644 µS/cm |
| pH: | 7.5 |
| Total hardness: | 17°dH; 3.03 mmol/l |

### 3. Examples

### Example 1

A receiving device in form of a cylindrical adapter was attached to the inner thread of a water faucet (in place of the aerator) and equipped with capsule 1. The capsule walls were sealed within the adapter using a flat seal ring so that the total amount of inflowing water flowed through the capsule. A total water volume of 2 1 feed water 1 was passed through the capsule in 50 ml portions with a water volume flow rate of 0.4-0.5 l/min (24-30 l/h). After every 50 ml water portion, the carbonate hardness (alkalinity), the pH, and the conductivity of the treated water volume were measured. The results are compiled in Table 1 below.

**Table 1: Carbonate hardness, pH, and conductivity of water that has been passed through capsule 1.**

| Sample | Treated water volume [ml] | Carbonate hardness [°dKH] | pH | Conductivity [µS/cm] |
|---|---|---|---|---|
| 1-1 | 50 | 5 | 6.5 | 238 |
| 1-2 | 50 | 5 | 6.5 | 240 |
| 1-3 | 50 | 6 | 6.6 | 257 |
| 1-4 | 50 | 6 | 6.6 | 262 |
| 1-5 | 50 | 6 | 6.6 | 274 |
| 1-6 | 50 | 6 | 6.6 | 271 |
| 1-7 | 50 | 6 | 6.6 | 272 |
| 1-8 | 50 | 6 | 6.6 | 273 |
| 1-9 | 50 | 6 | 6.6 | 278 |
| 1-10 | 50 | 6 | 6.6 | 280 |
| 1-11 | 50 | 6 | 6.6 | 283 |
| 1-12 | 50 | 6 | 6.7 | 285 |
| 1-13 | 50 | 6 | 6.7 | 284 |
| 1-14 | 50 | 6 | 6.7 | 282 |
| 1-15 | 50 | 6 | 6.7 | 283 |
| 1-16 | 50 | 6 | 6.7 | 280 |
| 1-17 | 50 | 6 | 6.7 | 281 |
| 1-18 | 50 | 6 | 6.7 | 285 |
| 1-19 | 50 | 6 | 6.7 | 289 |
| 1-20 | 50 | 6 | 6.7 | 291 |
| 1-21 | 50 | 6 | 6.8 | 293 |
| 1-22 | 50 | 6 | 6.8 | 297 |
| 1-23 | 50 | 6 | 6.8 | 298 |
| 1-24 | 50 | 6 | 6.8 | 298 |
| 1-25 | 50 | 6 | 6.8 | 296 |
| 1-26 | 50 | 6 | 6.8 | 295 |
| 1-27 | 50 | 6 | 6.8 | 291 |
| 1-28 | 50 | 7 | 6.8 | 295 |
| 1-29 | 50 | 7 | 6.8 | 294 |
| 1-30 | 50 | 7 | 6.8 | 297 |
| 1-31 | 50 | 7 | 6.8 | 296 |
| 1-32 | 50 | 7 | 6.8 | 298 |
| 1-33 | 50 | 7 | 6.8 | 300 |
| 1-34 | 50 | 7 | 6.8 | 295 |
| 1-35 | 50 | 7 | 6.8 | 298 |
| 1-36 | 50 | 7 | 6.9 | 301 |
| 1-37 | 50 | 7 | 6.9 | 304 |
| 1-38 | 50 | 7 | 6.9 | 300 |
| 1-39 | 50 | 7 | 6.9 | 301 |
| 1-40 | 50 | 7 | 7.0 | 302 |

As shown in Table 1 above, the pH value of the treated water was 6.5 at the beginning and shifted to 7.0 after 2 1 of the total feed water volume have been passed through the capsule. This test procedure was repeated 20 times (40 1 of treated water). Each liter was heated up to 100°C in a kettle. In parallel also 40 1 of feed water 1 were boiled in a second kettle. Subsequently, the lime precipitation was determined in both kettles by dissolving the lime precipitation with 1 liter diluted chloric acid and detecting by calcium and magnesium concentration by ICP (Coupled Argon Plasma) analysis. It was found that about 90 % less lime has been precipitated in the kettle fed with the treated water. Thus, the inventive capsule can provide efficient lime scale protection.

### Example 2

A receiving device in form of a cylindrical adapter was attached to the inner thread of a water faucet (in place of the aerator) and equipped with capsule 2. The capsule walls were sealed within the adapter using a flat seal ring so that the total amount of inflowing water flowed through the capsule. A total water volume of 2 1 feed water 1 was passed through the capsule in 1000 ml portions with a water volume flow rate of 0.3 l/min (18 l/h). pH, conductivity and carbonate hardness were measured in the first and the second liter of treated water.

**Table 2: Carbonate hardness, pH, and conductivity of water that has been passed through capsule 2.**

| Sample | Treated water volume [ml] | Carbonate hardness [°dKH] | pH | Conductivity [µS/cm] |
|---|---|---|---|---|
| 2-1 | 1000 | 6 | 6.6 | 280 |
| 2-2 | 1000 | 7 | 6.8 | 295 |

As shown in Table 2 above, the pH value of the treated water was 6.6 at the beginning and shifted to 6.8 after 2 l of the total feed water volume have been passed through the capsule.

### Example 3

A receiving device in form of a cylindrical adapter was attached to the inner thread of a water faucet (in place of the aerator) and equipped with capsule 3. The capsule walls were sealed within the adapter using a flat seal ring so that the total amount of inflowing water flowed through the capsule. A total water volume of 5 l feed water 2 was passed through the capsule in 1000 ml portions with a water volume flow rate of 0.3 l/min (18 l/h). After every 1000 ml water portion, the pH, and the conductivity of the treated water volume were measured. The results are compiled in Table 3 below.

**Table 3: Carbonate hardness, pH, and conductivity of water that has been passed through capsule 3.**

| Sample | Treated water volume [ml] | pH | Conductivity [µS/cm] |
|---|---|---|---|
| 3-1 | 1000 | 5.9 | 500 |
| 3-2 | 1000 | 6.6 | 510 |
| 3-3 | 1000 | 6.6 | 530 |
| 3-4 | 1000 | 6.7 | 540 |
| 3-5 | 1000 | 6.8 | 560 |

As shown in Table 3 above, the pH value of the treated water was 5.9 at the beginning and shifted to 6.8 after 5 l of the total feed water volume have been passed through the capsule. Thus, by arranging a layer comprising an acid within the capsule, the lime scale protection efficacy can be further improved and the inventive capsule can also provide efficient lime scale protection for larger water volumes.

## Claims

1. A single-use capsule (100) for water treatment, the single-use capsule comprising:
a capsule body (101) defining an inlet side (102) and an outlet side (103); and
a first cavity (104) located within the capsule body;
wherein the first cavity comprises an ion exchange element;
wherein the single-use capsule comprises a flat sheet membrane filter (105) arranged within the capsule body;
wherein the flat sheet membrane filter has a pore size of 0.2 µm or lower, and
wherein the ion exchange element comprises a weak acid and/or strong acid cation exchange material, which is 100% in the hydrogen form.

2. The single-use capsule according to claim 1,
wherein the single-use capsule is configured for treating only less than 5 liters of water, preferably less than 4 liters of water, more preferably only less than 3 liters of water, and most preferably only less than 2 liters of water.

3. The single-use capsule according to claim 1,
wherein the flat sheet membrane filter is an ultrafiltration flat sheet membrane filter.

4. The single-use capsule according to claim 1 or 3,
wherein the flat sheet membrane filter has a thickness below 2 mm, preferably between 0.1 mm and 1 mm.

5. The single-use capsule according to any of the preceding claims,
wherein the first cavity has a volume between 3 ml and 48 ml, preferably between 4 ml and 30 ml, and most preferably between 5 ml and 20 ml.

6. The single-use capsule according to any of the preceding claims, further comprising:
a first filter layer (106) arranged between the first cavity and the inlet side; and/or
a second filter layer (107) arranged between the first cavity and the outlet side.

7. The single-use capsule according to claim 6,
wherein the first and/or second filter layer comprises a fibrous material;
wherein the fibrous material of the first and/or second filter layer has a pore size between 0.5 µm and 200 µm, preferably between 10 and 150 µm, and most preferably between 50 and 100 µm, and/or
wherein the fibrous material of the first and/or second filter layer has a specific weight between 10 g/m² and 100 g/m², preferably between 20 g/m² and 80 g/m², and most preferably between 30 g/m² and 50 g/m²; and/or
wherein the first and/or second filter layer has a thickness below 5 mm, preferably below 2 mm.

8. The single-use capsule according to any of the preceding claims,
wherein the ion exchange element comprises a weak acid cation exchange material, which is 100% in the hydrogen form.

9. The single-use capsule according to any of the preceding claims, further comprising
a flow limiting structure (111) for limiting the water flow through the single-use capsule below 150 l/h, preferably below 100 l/h, and most preferably below 40 l/h.

10. The single-use capsule according to any of the preceding claims, further comprising:
an activated carbon element (108) located within the capsule body.

11. The single-use capsule according to any of the preceding claims,
wherein the single-use capsule does not comprise silver, silver alloys or silver compounds.

12. The single-use capsule according to any of the preceding claims,
wherein the capsule body is made of a material selected from the group consisting of plastic, bioplastic, oriented or non-oriented synthetic fibers, natural material, aluminum, and mixtures thereof.

13. The single-use capsule according to any of the preceding claims, wherein the capsule further comprises an acid composition comprising at least one acid and/or at least one acid salt within the first cavity and/or between the first cavity and the inlet side and/or between the first cavity and the outlet side, preferably the acid is selected from the group consisting of ascorbic acid, citric acid, fumaric acid, maleic acid, malic acid, tartaric acid, and mixtures thereof, and/or the acid salt is Cl⁻, SO₄²⁻, H₂PO₄⁻.

14. The single-use capsule according to any of the preceding claims,
wherein the capsule body has a volume between 5 ml and 50 ml, preferably between 8 ml and 40 ml, and most preferably between 10 ml and 25 ml.

15. A receiving device (700) for receiving a single-use capsule according to any of the preceding claims, comprising:
the single-use capsule (100) according to any of the preceding claims;
wherein the receiving device is configured for guiding water through the single-use capsule for treating the water.

16. The receiving device according to claim 16, further comprising:
a flow limiting device (705) configured for limiting the water flow through the single-use capsule below 150 l/h, preferably below 100 l/h, and more preferably below 40 l/h.

17. The receiving device according to claim 15 or 16,
wherein the receiving device is configured for being attached to a water pipe (701), preferably to a water faucet such that water of the water pipe flows through the single use capsule in the receiving device.

## Patentansprüche

1. Eine Einwegkapsel (100) zur Wasserbehandlung, wobei die Einwegkapsel umfasst:
ein Kapselgehäuse (101), wobei das Kapselgehäuse eine Einlassseite (102) und eine Auslassseite (103) definiert; und
ein erster Hohlraum (104), der sich innerhalb des Kapselgehäuses befindet;
wobei der erste Hohlraum ein Ionentauscherelement umfasst;
wobei die Einwegkapsel einen Flachmembranfilter (105) umfasst, der innerhalb des Kapselgehäuses angeordnet ist;
wobei der Flachmembranfilter eine Porengröße von 0.2 µm oder weniger aufweist, und
wobei das Ionentauscherelement ein schwach saures und/oder stark saures Kationentauschermaterial umfasst, welches zu 100% in der Wasserstoffform vorliegt.

2. Die Einwegkapsel gemäß Anspruch 1,
wobei die Einwegkapsel konfiguriert ist um nur weniger als 5 Liter Wasser zu behandeln, bevorzugt weniger als 4 Liter Wasser, mehr bevorzugt weniger als 3 Liter Wasser, und am meisten bevorzugt weniger als 2 Liter Wasser.

3. Die Einwegkapsel gemäß Anspruch 1,
wobei der Flachmembranfilter ein Ultrafiltrations-Flachmembranfilter ist.

4. Die Einwegkapsel gemäß Anspruch 1 oder 3,
wobei der Flachmembranfilter eine Dicke von weniger als 2 mm aufweist, bevorzugt zwischen 0.1 mm und 1 mm.

5. Die Einwegkapsel gemäß einem der vorherigen Ansprüche,
wobei der erste Hohlraum ein Volumen zwischen 3 ml und 48 ml aufweist, bevorzugt zwischen 4 ml und 30 ml, und am meisten bevorzugt zwischen 5 ml und 20 ml.

6. Die Einwegkapsel gemäß einem der vorherigen Ansprüche, zusätzlich umfassend:
eine erste Filterschicht (106), die zwischen dem ersten Hohlraum und der Einlassseite angeordnet ist; und/oder
eine zweite Filterschicht (107), die zwischen dem ersten Hohlraum und der Auslassseite angeordnet ist.

7. Die Einwegkapsel gemäß Anspruch 6,
wobei die erste und/oder die zweite Filterschicht ein faserförmiges Material umfasst,
wobei das faserförmige Material der ersten und/oder zweiten Filterschicht eine Porengröße zwischen 0.5 µm und 200 µm aufweist, bevorzugt zwischen 10 und 150 µm, und am meisten bevorzugt zwischen 50 und 100 µm, und/oder
wobei das faserförmige Material der ersten und/oder zweiten Filterschicht ein spezifisches Gewicht zwischen 10 g/m² und 100 g/m² aufweist, bevorzugt zwischen 20 g/m² und 80 g/m², und am meisten bevorzugt zwischen 30 g/m² und 50 g/m²; und/oder
wobei die erste und/oder die zweite Filterschicht eine Dicke von weniger als 5 mm aufweist, bevorzugt weniger als 2 mm.

8. Die Einwegkapsel gemäß einem der vorherigen Ansprüche,
wobei das Ionentauscherelement ein schwach saures Kationentauschermaterial umfasst, welches zu 100% in der Wasserstoffform vorliegt.

9. Die Einwegkapsel gemäß einem der vorherigen Ansprüche, zusätzlich umfassend:
eine flussbegrenzende Struktur (111) zur Begrenzung des Wasserflusses durch die Einwegkapsel auf unter 150 l/h, bevorzugt unter 100 l/h, und am meisten bevorzugt unter 40 l/h.

10. Die Einwegkapsel gemäß einem der vorherigen Ansprüche, zusätzlich umfassend:
ein aktiviertes Kohlenstoffelement (108), welches innerhalb des Kapselgehäuses angeordnet ist.

11. Die Einwegkapsel gemäß einem der vorherigen Ansprüche,
wobei die Einwegkapsel weder Silber, Silberlegierungen noch Silberverbindungen umfasst.

12. Die Einwegkapsel gemäß einem der vorherigen Ansprüche,
wobei das Kapselgehäuse aus einem Material, ausgewählt aus der Gruppe bestehend aus Kunststoff, Biokunststoff, ausgerichteten und nicht-ausgerichteten synthetischen Fasern, natürlichem Material, Aluminium, und Mischungen davon, hergestellt ist.

13. Die Einwegkapsel gemäß einem der vorherigen Ansprüche, wobei die Kapsel zusätzlich eine Säurezusammensetzung umfassend mindestens eine Säure und/oder mindestens ein Säuresalz innerhalb des ersten Hohlraums und/oder zwischen dem ersten Hohlraum und der Einlassseite und/oder zwischen dem ersten Hohlraum und der Auslassseite umfasst, bevorzugt ist die Säure ausgewählt aus der Gruppe bestehend aus Ascorbinsäure, Zitronensäure, Fumarsäure, Maleinsäure, Apfelsäure, Weinsäure und Mischungen davon, und/oder das Säuresalz ist Cl⁻, SO₄²⁻, H₂PO₄⁻.

14. Die Einwegkapsel gemäß einem der vorherigen Ansprüche,
wobei das Kapselgehäuse ein Volumen zwischen 5 ml und 50 ml aufweist, bevorzugt zwischen 8 ml und 40 ml, und am meisten bevorzugt zwischen 10 ml und 25 ml.

15. Eine Aufnahmevorrichtung (700) zur Aufnahme einer Einwegkapsel gemäß einem der vorherigen Ansprüche, umfassend:
eine Einwegkapsel (100) gemäß einem der vorherigen Ansprüche;
wobei die Aufnahmevorrichtung zum Führen von Wasser durch die Einwegkapsel zur Wasserbehandlung konfiguriert ist.

16. Die Aufnahmevorrichtung gemäß Anspruch 16, zusätzlich umfassend:
eine flussbegrenzende Vorrichtung (705) zur Begrenzung des Wasserflusses durch die Einwegkapsel auf unter 150 l/h, bevorzugt unter 100 l/h, und am meisten bevorzugt unter 40 l/h.

17. Die Aufnahmevorrichtung gemäß Anspruch 15 oder 16,
wobei die Aufnahmevorrichtung zur Befestigung an ein Wasserrohr (701) konfiguriert ist, bevorzugt an einen Wasserhahn, so dass das Wasser des Wasserohrs durch die Einwegkapsel in der Aufnahmevorrichtung fließt.

## Revendications

1. Capsule à usage unique (100) destinée au traitement de l'eau, la capsule à usage unique comprenant :
un corps de capsule (101) définissant un côté d'entrée (102) et un côté de sortie (103) ; et
une première cavité (104) située au sein du corps de capsule ;
dans laquelle la première cavité comprend un élément échangeur d'ions ;
dans laquelle la capsule à usage unique comprend un filtre de membrane à feuillet plat (105) agencé au sein du corps de capsule ;
dans laquelle le filtre membranaire à feuillet plat possède une taille de pore inférieure ou égale à 0,2 µm, et
dans laquelle l'élément échangeur d'ions comprend un matériau échangeur de cations faiblement acide et/ou fortement acide, qui est 100 % sous la forme d'hydrogène.

2. Capsule à usage unique selon la revendication 1,
dans laquelle la capsule à usage unique est conçue pour le traitement de seulement moins de 5 litres d'eau, de préférence de moins de 4 litres d'eau, plus préférablement de seulement moins de 3 litres d'eau, et encore plus préférablement de seulement moins de 2 litres d'eau.

3. Capsule à usage unique selon la revendication 1,
dans laquelle le filtre membranaire à feuillet plat consiste en un filtre membranaire à feuillet plat par ultrafiltration.

4. Capsule à usage unique selon la revendication 1 ou la revendication 3, dans laquelle le filtre membranaire à feuillet plat possède une épaisseur inférieure à 2 mm, de préférence comprise entre 0,1 mm et 1 mm.

5. Capsule à usage unique selon l'une quelconque des revendications précédentes,
dans laquelle la première cavité possède un volume compris entre 3 ml et 48 ml, de préférence comprise entre 4 ml et 30 ml, et plus préférablement compris entre 5 ml et 20 ml.

6. Capsule à usage unique selon l'une quelconque des revendications précédentes, comprenant en outre :
une première couche de filtre (106) agencée entre la première cavité le côté d'entrée ; et/ou
une deuxième couche de filtre (107) agencée entre la première cavité et le côté de sortie.

7. Capsule à usage unique selon la revendication 6,
dans laquelle la première et/ou la deuxième couche de filtre comprend un matériau fibreux ;
dans laquelle le matériau fibreux de la première et/ou de la deuxième couche de filtre possède une taille de pore comprise entre 0,5 µm et 200 µm, de préférence comprise entre 10 et 150 micromètres, et plus préférablement entre 50 et 100 micromètres, et/ou
dans laquelle le matériau fibreux de la première et/ou de la deuxième couche de filtre possède un poids spécifique compris entre 10 g/m² et 100 g/m², de préférence entre 20 g/m² et 80 g/m², et plus préférablement entre 30 g/m² et 50 g/m² ; et/ou
dans laquelle la première et/ou la deuxième couche de filtre possède une épaisseur inférieure à 5 mm, de préférence inférieure à 2 mm.

8. Capsule à usage unique selon l'une quelconque des revendications précédentes,
dans laquelle l'élément échangeur d'ions comprend un matériau échangeur de cations faiblement acide, qui est 100 % sous la forme d'hydrogène.

9. Capsule à usage unique selon l'une quelconque des revendications précédentes, comprenant en outre
une structure limitant le débit (111) permettant de limiter le débit d'eau à travers la capsule à usage unique à une valeur inférieure à 150 l/h, de préférence inférieure à 100 l/h, et plus préférablement inférieure à 40 l/h.

10. Capsule à usage unique selon l'une quelconque des revendications précédentes, comprenant en outre :
un élément à carbone activé (108) situé au sein du corps de capsule.

11. Capsule à usage unique selon l'une quelconque des revendications précédentes,
dans laquelle la capsule à usage unique ne comprend pas d'argent, d'alliages à base d'argent ou de composés à base d'argent.

12. Capsule à usage unique selon l'une quelconque des revendications précédentes,
dans laquelle le corps de capsule est fabriqué à partir d'un matériau choisi parmi le groupe constitué de plastique, de bioplastique, de fibres synthétiques orientées ou non orientées, d'un matériau naturel, d'aluminium et de mélanges de ceux-ci.

13. Capsule à usage unique selon l'une quelconque des revendications précédentes, dans laquelle la capsule comprend en outre une composition acide comprenant au moins un acide et/ou au moins un sel d'acide au sein de la première cavité et/ou situé entre la première cavité et le côté d'entrée et/ou situé entre la première cavité et le côté de sortie, de préférence l'acide est choisi parmi le groupe constitué de l'acide ascorbique, de l'acide citrique, de l'acide fumarique, de l'acide maléique, de l'acide malique, de l'acide tartrique, et de mélanges de ceux-ci, et/ou le sel d'acide est Cl⁻, SO₄²⁻, H₂PO₄⁻.

14. Capsule à usage unique selon l'une quelconque des revendications précédentes,
dans laquelle le corps de capsule possède un volume compris entre 5 ml et 150 ml, de préférence entre 8 ml et 40 ml, et plus préférablement entre 10 ml et 25 ml.

15. Dispositif de réception (700) permettant de recevoir une capsule à usage unique selon l'une quelconque des revendications précédentes, comprenant :
la capsule à usage unique (100) selon l'une quelconque des revendications précédentes ;
dans lequel le dispositif de réception est conçu pour guider l'eau à travers la capsule à usage unique pour le traitement de l'eau.

16. Dispositif de réception selon la revendication 16, comprenant en outre :
un dispositif limiteur de débit (705) conçu pour limiter le débit d'eau à travers la capsule à usage unique à une valeur inférieure à 150 l/h, de préférence inférieure à 100 l/h, et plus préférablement inférieure à 40 l/h.

17. Dispositif de réception selon la revendication 15 ou la revendication 16, dans lequel le dispositif de réception est conçu pour être attaché à un conduit d'eau (701), de préférence à un robinet d'eau tel que l'eau du conduit d'eau s'écoule à travers la capsule à usage unique dans le dispositif de réception.
